# EUROPÄISCHE PATENTSCHRIFT

(11) **EP 0 470 950 B1**
(45) Veröffentlichungstag und Bekanntmachung des Hinweises auf die Patenterteilung: **09.03.1994**
(21) Anmeldenummer: 89900107.7
(22) Anmeldetag: 24.11.1988
(51) Int. Cl.: B60K 23/04

(54) **VORRICHTUNG ZUR ELEKTRO-HYDRAULISCHEN BETÄTIGUNG EINER EIN VERTEILERDIFFERENTIALGETRIEBE EINES KRAFTFAHRZEUGS SPERRENDEN KUPPLUNG**
DEVICE FOR ELECTROHYDRAULIC ACTUATOR OF A CLUTCH WHICH LOCKS THE TRANSFER DIFFERENTIAL OF A VEHICLE
DISPOSITIF D'ACTIONNEMENT ELECTRO-HYDRAULIQUE DE L'EMBRAYAGE DE BLOCAGE DU DIFFERENTIEL REPARTITEUR D'UN VEHICULE

(30) Priorität: 01.12.1987 DE 3740662
(43) Veröffentlichungstag der Anmeldung: 19.02.1992
(73) Patentinhaber: ZF FRIEDRICHSHAFEN Aktiengesellschaft, 88038 Friedrichshafen (DE)
(72) Erfinder: GIERER, Georg, D-7993 Kressbronn (DE)
(86) Internationale Anmeldenummer: EP8801065
(87) Internationale Veröffentlichungsnummer: WO8905247

(56) Entgegenhaltungen:
- EP-A- 0 246 884
- DE-C- 3 212 495
- DE-C- 3 600 873

## Beschreibung

Die Erfindung bezieht sich auf eine Vorrichtung zur elektro-hydraulischen Betätigung einer ein Verteilerdifferentialgetriebe eines Kraftfahrzeugs sperrenden Kupplung mit einem Betätigungskolben, der über eine Hauptsteuerleitung in Abhängigkeit von der Stellung eines elektrisch betätigbaren Drucksteuerventils druckmittelbeaufschlagbar ist, wobei das Drucksteuerventil bei seiner Betätigung Druckmittel drucklos zum Tank ableitet und wobei das Verteilerdifferentialgetriebe einem Automatikgetriebe nachgeordnet ist.

Bei einer bekannten Vorrichtung dieser Art (DE-A 32 12 495) wird ein am Getriebeausgang angeordnetes, mit beiden Achsen des Kraftfahrzeugs verbundenes Verteilerdifferentialgetriebe mittels einer Lamellenkupplung in Abhängigkeit von Kenngrößen des Kraftfahrzeuges, wie Fahrgeschwindigkeit, Lenkwinkel oder Motordrehmoment, gesperrt. Zu diesem Zweck wird die Lamellenkupplung durch einen hydraulischen Arbeitsdruck einer Hauptsteuerleitung entgegen einer Ausrückfeder eingerückt, wobei aufgrund der vorgenannten Kenngrößen mittels eines elektro-magnetisch betätigten Drucksteuerventils der Arbeitsdruck in der Hauptsteuerleitung und damit die Sperrwirkung der Lamellenkupplung eingestellt werden soll. Für diese Betätigung der Lamellenkupplung ist ein separates Hydrauliksystem vorgesehen. Außerdem können in der Hauptsteuerleitung bei einer Betätigung des Drucksteuerventils im Öffnungssinne Druckschwingungen auftreten, die zu einem indifferenten Steuerverhalten des gesamten Drucksystems führen.

Es ist daher Aufgabe der vorliegenden Erfindung, eine Vorrichtung zur elektro-hydraulischen Betätigung einer Kupplung eines Verteilerdifferentialgetriebes zur Verringerung des baulichen Aufwandes mit einem am Kraftfahrzeug bereits vorhandenen hydraulischen Steuersystem zu kombinieren, wobei Druckschwankungen, die durch parallele Steuervorgänge des Steuersystems hervorgerufen werden und zu Systemdruckeinbrüchen führen können sowie Eigenschwingungen des Drucksteuerventils keine Auswirkungen auf die Betätigung der gattungsgemäßen Vorrichtung haben sollen.

Diese Aufgabe wird an einer Vorrichtung der vorgenannten Art dadurch gelöst, daß die Hauptsteuerleitung an ein Hauptdrucksystem einer Steuerung des Automatikgetriebes angeschlossen ist, daß vom Hauptdrucksystem aus über ein Druckreduzierventil in einer Vorsteuerleitung ein reduzierter konstanter Druck erzielt wird, wobei die Vorsteuerleitung, in der das Drucksteuerventil angeordnet ist, über einen Steuerraum auf einen Steuerkolben eines in der Hauptsteuerleitung angeordneten Kupplungsventils wirkt, dessen andererseits federbelasteter Kolbenschieber bei geöffnetem Drucksteuerventil über gesteuerte Ringräume den Betätigungskolben mit Druckmittel aus der Hauptsteuerleitung beaufschlagt, und daß in der Vorsteuerleitung zum Abbau von Druckschwingungen eine Dämpfungseinrichtung, vorzugsweise Federspeicherdämpfer, angeordnet ist.

Aus dem Hauptdrucksystem des Automatikgetriebes wird demnach über die Hauptsteuerleitung, je nach der Stellung des Kupplungsventils, dem Betätigungskolben Druckmittel zugeführt oder er wird druckentlastet. Die Betätigung des Kupplungsventils erfolgt dabei über die Vorsteuerleitung, in der ein reduzierter, konstanter Druck über das Druckreduzierventil erzielt wird. Das Druckreduzierventil eliminiert folglich bereits Druckschwankungen, die im Hauptdrucksystem des Automatikgetriebes auftreten können, so daß sich Fehlsteuerungen der Kupplung verhindern lassen. Da das Drucksteuerventil in der einen reduzierten Arbeitsdruck aufweisenden Vorsteuerleitung angeordnet ist und nur auf den Steuerkolben des andererseits federbelasteten Kupplungsventils wirkt, kann die Gefahr von Schwingungsanregungen erheblich reduziert werden. Aus Sicherheitsgründen ist in der Vorsteuerleitung aber noch eine Dämpfungseinrichtung in Form eines Federspeicherdämpfers angeordnet, die Eigenschwingungen des Drucksteuerventils abbaut.

Weitere erfindungsgemäße Ausgestaltungen sind in den Unteransprüchen 2 bis 6 beschrieben. Danach kann ein Dämpfungskolben des Federspeicherdämpfers mit einem dem Kupplungsventil in der Hauptsteuerleitung vorgeschalteten Sicherheitsventil zusammenwirken, das bei geöffnetem Drucksteuerventil über gesteuerte Ringräume eine zum Kupplungsventil führende Verbindungsleitung mit Druckmittel aus der Hauptsteuerleitung beaufschlagt, und daß ein Steuerschieber des Sicherheitsventils an einer Stirnseite mit dem Druck der Hauptsteuerleitung und an der gegenüberliegenden Stirnseite mit einer vom Dämpfungskolben erzielten Kraft der Feder beaufschlagt ist. Dadurch ist über die vom Dämpfungskolben vorgespannte Feder bei nicht betätigtem, also stromlosem Drucksteuerventil aufgrund der Federvorspannung ein Sicherheitsdruck eingestellt, d. h., dieses dem Kupplungsventil vorgeschaltete Sicherheitsventil leitet dem Kupplungsventil erst dann Systemdruck zu, wenn der Systemdruck über dem durch die Feder eingestellten Sicherheitsdruck liegt. Bei stromlosem Drucksteuerventil herrscht in der Vorsteuerleitung ein Druck, der den Dämpfungskolben in eine Endstellung bewegt, in der dieser an einem Anschlag des Gehäuses anliegt. Wenn durch das Drucksteuerventil der Druck in der Vorsteuerleitung reduziert wird, so bewegt sich der Dämpfungskolben von dem Anschlag fort, und das Sicherheitsventil kann vom auf dessen Stirnfläche wirkenden Druck der Hauptsteuerleitung so weit verschoben werden, daß ein Druckmittelzulauf über das ebenfalls einen Öffnungsquerschnitt freigebende Kupplungsventil zum Betätigungskolben der Kupplung erfolgt. In dieser Lage des Dämpfungskolbens kann dieser wieder die Funktion eines Federspeicherdämpfers erfüllen und Druckschwingungen im System ausgleichen. Tritt in diesem Zustand des Systems in der Hauptsteuerleitung ein Druckeinbruch auf, so wird das Sicherheitsventil nicht zum Rücklauf hin geöffnet, da die Federkraft auf das Sicherheitsventil ebenfalls reduziert ist. Die gleichen Voraussetzungen gelten auch für Druckeinbrüche in der Hauptsteuerleitung vor oder während des Schließens der Kupplung, da auch dann die Federvorspannung am Sicherheitsventil durch die veränderte Lage des Dämpfungskolbens so weit reduziert ist, daß das Sicherheitsventil seine Arbeitsstellung einnehmen kann. Es wird weiterhin vorgeschlagen, daß die Flächen an der Stirnseite des Steuerschiebers und des Dämpfungskolbens unterschiedlich dimensioniert sind, so daß trotz unterschiedlicher Druckniveaus die bei geschlossenem Drucksteuerventil am Steuerschieber und am Dämpfungskolben auftretenden Axialkräfte ausgeglichen sind.

Weiterhin soll in der Vorsteuerleitung zwischen dem Druckreduzierventil und dem Drucksteuerventil eine Drossel angeordnet sein, die bei geöffnetem Drucksteuerventil den aus dem Hauptdrucksystem des Automatikgetriebes Zugeführten Druckmittelstrom begrenzt, damit Druckeinbrüche im Hauptdrucksystem vermieden werden. In weiterer Ausgestaltung der Erfindung wird vorgeschlagen, daß das Kupplungsventil einen Kolbenschieber aufweist, der an einer Ringfläche des Steuerkolbens gegen die Kraft der Feder mit dem am Betätigungskolben der Kupplung anstehenden Druckmittel beaufschlagt ist. Bei geschlossener Kupplung wirken daher auf den Kolbenschieber des Kupplungsventils in einer Richtung der Druck aus der Vorsteuerleitung und der Betätigungsdruck der Kupplung.

Die Erfindung ist nicht auf die Merkmalskombination der Ansprüche beschränkt. Für den Fachmann ergeben sich weitere sinnvolle Kombinationsmöglichkeiten von Ansprüchen und einzelnen Anspruchsmerkmalen aus der Aufgabenstellung.

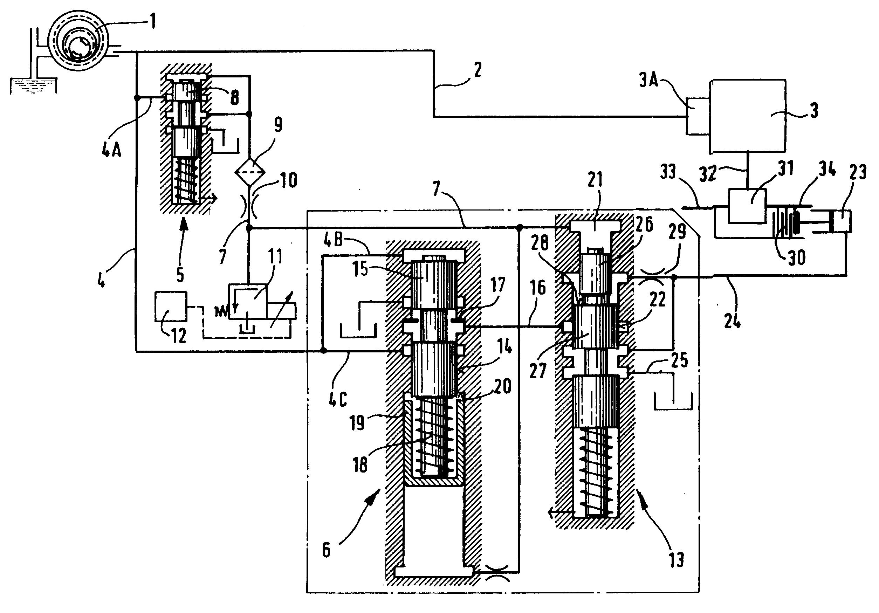

Zur weiteren Erläuterung der Erfindung wird auf die Zeichnung verwiesen, in der ein Ausführungsbeispiel vereinfacht dargestellt ist. Die einzige Fig. zeigt in schematischer Darstellung eine erfindungsgemäße Vorrichtung zur elektro-hydraulischen Betätigung einer Kupplung zum Sperren eines Verteilerdifferentialgetriebes.

Mit 1 ist dabei eine Hydraulikpumpe bezeichnet, die Druckmittel in ein Hauptdrucksystem 2 einer Steuerung 3A eines nicht näher dargestellten Automatikgetriebes 3 für Kraftfahrzeuge fördert. Der Aufbau einer entsprechenden Steuerung 3A kann beispielsweise der WO-A86/06809 entnommen werden. Vom Hauptdrucksystem 2 für die Steuerung 3A zweigt eine Hauptsteuerleitung 4 ab, die über einen Leitungsabschnitt 4A zu einem Druckreduzierventil 5 führt. Außerdem ist die Hauptsteuerleitung 4 über Leitungsabschnitte 4B und 4C an ein Sicherheitsventil 6 angeschlossen. Mit dem Druckreduzierventil 5 steht eine Vorsteuerleitung 7 in Verbindung. Das Druckreduzierventil 5 schafft in dieser Vorsteuerleitung 7 einen gegenüber dem Systemdruck, der im Hauptdrucksystem 2 und in der Hauptsteuerleitung 4 herrscht, reduzierten konstanten Druck. Das Druckreduzierventil 5 weist einen federbelasteten Kolbenschieber 8 auf, der bei Unterschreitung eines Grenzdruckes in der Vorsteuerleitung 7 diese mit dem Leitungsabschnitt 4A der Hauptsteuerleitung 4 verbindet. Weiterhin sind in der Vorsteuerleitung 7 ein Filter 9 und eine Drossel 10 angeordnet. Im Anschluß an die Drossel 10 ist die Vorsteuerleitung 7 mit einem elektrisch betätigten Drucksteuerventil 11 verbunden, das funktionell als Abschaltventil dient und bei seiner Betätigung einen Druckabbau in der Vorsteuerleitung 7 bewirkt. Das Drucksteuerventil 11 steht mit einer Betätigungseinrichtung 12 in Verbindung. An die Vorsteuerleitung 7 sind schließlich das Sicherheitsventil 6 und ein Kupplungsventil 13 angeschlossen.

Das Sicherheitsventil 6 weist einen Steuerschieber 14 auf, der an der Stirnfläche seines Steuerkolbens 15 über einen Leitungsabschnitt 4B der Hauptsteuerleitung 4 druckmittelbeaufschlagt ist. Ein Leitungsabschnitt 4C mündet als steuerbarer Anschluß in das Innere des Sicherheitsventils 6, wobei der Steuerschieber 14 in seinen beiden Schaltstellungen den Leitungsabschnitt 4C mit einer Verbindungsleitung 16 verbindet oder diese Verbindungsleitung 16 zum Tank entleert. Die durch den Druck im Leitungsabschnitt 4B hervorgerufene Abwärtsbewegung des Steuerschiebers 14 ist begrenzt durch einen Anschlag 17. An dem dem Steuerkolben 15 entgegengesetzten Ende weist der Steuerschieber 14 eine Feder 18 auf. Diese Feder 18 ist gemeinsam mit einem Dämpfungskolben 19 als Federspeicherdämpfer ausgebildet, wobei der Dämpfungskolben 19 axial gegen einen Anschlag 20 bewegbar ist und am Dämpfungskolben 19 stirnseitig eine Druckmittelbeaufschlagung durch die Vorsteuerleitung 7 erfolgt. Parallel dazu ist die Vorsteuerleitung 7 an einen Steuerraum 21 des Kupplungsventils 13 angeschlossen. Das Kupplungsventil 13 weist weiterhin einen Kolbenschieber 22 auf, der einerseits über den Steuerraum 21 von der Vorsteuerleitung druckmittelbeaufschlagt und am gegenüberliegenden Ende federbelastet ist. Je nach der Stellung des Kolbenschiebers 22 ist die Verbindungsleitung an eine zu einem Betätigungskolben 23 führende Kupplungsleitung 24 oder an eine Rücklaufleitung 25 angeschlossen. In den Steuerraum 21 taucht ein Steuerkolben 26 ein, der gegenüber einem benachbarten Steuerkolben 27 mit geringerem Durchmesser ausgebildet ist, so daß der Kolbenschieber 22 an dieser Stelle eine in axialer Richtung weisende Ringfläche 28 hat. Von der Kupplungsleitung 24 aus ist ein eine Drossel 29 aufweisender Leitungsabschnitt derart an das Kupplungsventil 13 angeschlossen, daß das Druckmittel auf die Ringfläche 28 wirkt.

Der über die Kupplungsleitung 24 druckmittelbeaufschlagbare Betätigungskolben 23 wirkt auf eine Kupplung 30, die zur Sperrung eines schematisch dargestellten Verteilerdifferentialgetriebes 31 dient. Das Verteilerdifferentialgetriebe 31 ist an eine Abtriebswelle 32 des Automatikgetriebes angeschlossen und weist Ausgangswellen 33 und 34 auf, die zum Antrieb nicht näher dargestellter Radachsen des Kraftfahrzeugs dienen. Das Verteilerdifferentialgetriebe 31 läßt bei ausgekuppelter Stellung der Kupplung 30 Differenzdrehzahlen der Ausgangswellen 33 und 34 zu, wohingegen in der eingekuppelten Stellung der Kupplung 30 die Ausgangswellen 33 und 34 drehfest miteinander verbunden sind.

Die Funktion der dargestellten Vorrichtung ist folgende: Von der Hydraulikpumpe 1 aus wird die Steuerung 3A des Automatikgetriebes 3 über das Hauptdrucksystem 2 mit Druckmittel versorgt, das über die Hauptsteuerleitung 4 auch zur Steuerung der Kupplung 30 des Verteilerdifferentialgetriebes 31 dient. In der Hauptsteuerleitung 4 herrscht der Systemdruck des Hauptdrucksystems 2, während über das Druckreduzierventil 5 ein geringerer Druck für die Vorsteuerleitung 7 erzielt wird. In der dargestellten Position des Steuerschiebers 14 des Sicherheitsventils 6 und des Kolbenschiebers 22 des Kupplungsventils 13 herrscht maximaler Druck in der Vorsteuerleitung 7. Das Sicherheitsventil 6 verhindert in dieser Stellung, in der der Dämpfungskolben 19 am Anschlag 20 anliegt, daß Systemdruckeinbrüche die Stellung der in diesem Fall ausgerückten Kupplung verändern. Wird nun über die Betätigungseinrichtung 12 das Drucksteuerventil 11 zum Tankanschluß hin geöffnet, so fällt der Druck in der Vorsteuerleitung 7 ab und der Dämpfungskolben 19 bewegt sich in eine untere Position, in der die Vorspannung der Feder 18 reduziert wird, so daß der Steuerschieber 14 aufgrund des an der gegenüberliegenden Stirnseite anstehenden Systemdrucks ebenfalls in eine Stellung bewegt wird, in der er den Anschluß 4C der Hauptsteuerleitung 4 mit der Verbindungsleitung 16 verbindet. Gleichzeitig fällt auch der Druck im Steuerraum 21 des Kupplungsventils 13 ab, und der Kolbenschieber 22 wird durch Federkraft in eine Position bewegt, in der er die Verbindungsleitung 16 mit der Kupplungsleitung 24 verbindet, so daß der Betätigungskolben 23 die Kupplung einrückt und folglich das Verteilerdifferentialgetriebe 31 sperrt.

Die bei geöffnetem Drucksteuerventil 11 in der Vorsteuerleitung 7 durch die Eigenfrequenz des Drucksteuerventils 11 auftretenden Druckschwingungen werden durch den abgefederten Dämpfungskolben 19 ausgeglichen. Wenn im Hauptdrucksystem 2 des Automatikgetriebes 3 und somit auch in der Hauptsteuerleitung 4 ein Druckeinbruch auftritt, so wirkt sich dieser bei eingekuppelter Kupplung 30 nicht aus, denn die Gegenkraft der Feder 18 am Steuerschieber 14 des Sicherheitsventils 6 ist so gering, daß das Sicherheitsventil 6 nicht öffnet. Gleiches gilt auch dann, wenn der Systemdruck vor einer Schaltung der Betätigungseinrichtung 12 stark abgesunken ist. Bei geöffnetem Drucksteuerventil 11 sinkt die Gegenkraft der Feder am Steuerschieber 14 so weit, daß das Sicherheitsventil auch bei reduziertem Systemdruck in die Stellung verschoben wird, in der es die Hauptsteuerleitung 4 mit der Verbindungsleitung 16 verbindet.

| Bezugszeichen | | | |
|---|---|---|---|
| 1 | Hydraulikpumpe | 30 | Kupplung |
| 2 | Hauptdrucksystem | 31 | Verteilerdifferentialgetriebe |
| 3 | Automatikgetriebe | 32 | Abtriebswelle |
| 3A | Steuerung | 33 | Ausgangswelle |
| 4 | Hauptsteuerleitung | 34 | Ausgangswelle |
| 4A | Leitungsabschnitt von 4 | | |
| 4B | Leitungsabschnitt von 4 | | |
| 4C | Leitungsabschnitt von 4 | | |
| 5 | Druckreduzierventil | | |
| 6 | Sicherheitsventil | | |
| 7 | Vorsteuerleitung | | |
| 8 | Kolbenschieber von 5 | | |
| 9 | Filter | | |
| 10 | Drossel | | |
| 11 | Drucksteuerventil | | |
| 12 | Betätigungseinrichtung | | |
| 13 | Kupplungsventil | | |
| 14 | Steuerschieber von 6 | | |
| 15 | Steuerkolben von 14 | | |
| 16 | Verbindungsleitung | | |
| 17 | Anschlag für 15 | | |
| 18 | Feder | | |
| 19 | Dämpfungskolben | | |
| 20 | Anschlag für 19 | | |
| 21 | Steuerraum von 13 | | |
| 22 | Kolbenschieber von 13 | | |
| 23 | Betätigungskolben | | |
| 24 | Kupplungsleitung | | |
| 25 | Rücklaufleitung | | |
| 26 | Steuerkolben | | |
| 27 | Steuerkolben | | |
| 28 | Ringfläche | | |
| 29 | Drossel | | |

## Patentansprüche

1. Vorrichtung zur elektro-hydraulischen Betätigung einer ein Verteilerdifferentialgetriebe (31) eines Kraftfahrzeugs sperrenden Kupplung (30) mit einem Betätigungskolben (23), der über eine Hauptsteuerleitung (4) in Abhängigkeit von der Stellung eines elektrisch betätigbaren Drucksteuerventils (11) druckmittelbeaufschlagbar ist, wobei das Drucksteuerventil (11) bei seiner Betätigung Druckmittel drucklos zum Tank ableitet und wobei das Verteilerdifferentialgetriebe (31) einem Automatikgetriebe (3) nachgeordnet ist, dadurch **gekennzeichnet,** daß die Hauptsteuerleitung (4) an ein Hauptdrucksystem (2) einer Steuerung (3A) des Automatikgetriebes angeschlossen ist, daß vom Hauptdrucksystem (2) aus über ein Druckreduzierventil (5) in einer Vorsteuerleitung (7) ein reduzierter konstanter Druck erzielt wird, wobei die Vorsteuerleitung (7), in der das Drucksteuerventil (11) angeordnet ist, über einen Steuerraum (21) auf einen Steuerkolben (26) eines in der Hauptsteuerleitung (4) angeordneten Kupplungsventils (13) wirkt, dessen andererseits federbelasteter Kolbenschieber (22) bei geöffnetem Drucksteuerventil (11) über gesteuerte Ringräume den Betätigungskolben (23) mit Druckmittel aus der Hauptsteuerleitung (4) beaufschlagt, und daß in der Vorsteuerleitung (7) zum Abbau von Druckschwingungen eine Dämpfungseinrichtung, vorzugsweise Federspeicherdämpfer (18, 19), angeordnet ist.

2. Vorrichtung nach Anspruch 1, dadurch **gekennzeichnet,** daß ein Dämpfungskolben (19) des Federspeicherdämpfers mit einem dem Kupplungsventil (13) in der Hauptsteuerleitung (4) vorgeschalteten Sicherheitsventil (6) zusammenwirkt, das bei geöffnetem Drucksteuerventil (11) über gesteuerte Ringräume eine zum Kupplungsventil (13) führende Verbindungsleitung (16) mit Druckmittel aus der Hauptsteuerleitung (4) beaufschlagt, und daß ein Steuerschieber (14) des Sicherheitsventils (6) an einer Stirnseite mit dem Druck der Hauptsteuerleitung (4) und an der gegenüberliegenden Stirnseite mit einer vom Dämpfungskolben (19) erzielten Kraft der Feder (18) beaufschlagt ist.

3. Vorrichtung nach einem der vorhergehenden Ansprüche, dadurch **gekennzeichnet,** daß der Dämpfungskolben (19) vom Druck in der Vorsteuerleitung (7) in eine Endstellung bewegbar ist, in der er an einem Anschlag (20) eines Gehäuses des Sicherheitsventils (6) anliegt.

4. Vorrichtung nach einem der vorhergehenden Ansprüche, dadurch **gekennzeichnet,** daß unter Berücksichtigung der zwischen Hauptsteuerleitung (4) und Vorsteuerleitung (7) bei geschlossenem Drucksteuerventil (11) herrschenden Druckdifferenz die Flächen an der Stirnseite des Steuerschiebers (14) und des Dämpfungskolbens (19) zur Erzielung gleicher Axialkräfte unterschiedlich dimensioniert sind.

5. Vorrichtung nach einem der vorhergehenden Ansprüche, dadurch **gekennzeichnet,** daß zwischen dem Druckreduzierventil (5) und dem Drucksteuerventil (11) eine Drossel (10) angeordnet ist.

6. Vorrichtung nach einem der vorhergehenden Ansprüche, dadurch **gekennzeichnet,** daß der Kolbenschieber (22) des Kupplungsventils (13) an einer Ringfläche (28) seines Steuerkolbens (27) gegen Federkraft mit dem am Betätigungskolben (23) der Kupplung (30) anstehenden Druckmittel beaufschlagt ist.

## Claims

1. Device for the electrohydraulic actuation of a clutch (30) which locks the transfer differential (31) of a motor vehicle, comprising an actuating piston (23), which can be subjected to the action of a hydraulic fluid via a main control line (4) as a function of the position of a pressure control valve (11) which can be electrically actuated and which, when actuated, delivers hydraulic fluid without pressure to the reservoir, an automatic gearbox (3) being disposed downstream of the transfer differential (31), characterised in that the main control line (4) is connected to a main pressure system (2) of a control (3A) of the automatic gearbox, that a reduced constant pressure is obtained from the main pressure system (2) via a pressure reducing valve (5) in a pilot control line (7), the latter (7), in which the pressure control valve (11) is arranged, acting via a control chamber (21) on a control piston (26) of a clutch valve (13) which is arranged in the main control line (4) and the piston slide (22) of which, being spring-loaded on the other side, subjects the actuating piston (23) to the action of hydraulic fluid from the main control line (4) via controlled annular chambers when the pressure control valve (11) is open, and that a damping device, preferably a spring-loaded damper (18, 19), is arranged in the pilot control line (7) to reduce pressure fluctuations.

2. Device according to claim 1, characterised in that a damping piston (19) of the spring-loaded damper co-operates with a safety valve (6), which is disposed upstream of the clutch valve (13) in the main control line (4) and which subjects a connecting line (16) leading to the clutch valve (13) to the action of hydraulic fluid from the main control line (4) via controlled annular chambers when the pressure control valve (11) is open, and that a control slide (14) of the safety valve (6) is subjected at one front end to the action of the pressure of the main control line (4) and at the opposite front end to a force of the spring (18) which is obtained by the damping piston (19).

3. Device according to one of the preceding claims, characterised in that the damping piston (19) can be moved by the pressure in the pilot control line (7) into an end position in which it bears against a stop (20) of a housing of the safety valve (6).

4. Device according to one of the preceding claims, characterised in that, with regard to the pressure difference between the main control line (4) and the pilot control line (7) when the pressure control valve (11) is closed, the surfaces at the front end of the control slide (14) and of the damping piston (19) are given different dimensions to obtain equal axial forces.

5. Device according to one of the preceding claims, characterised in that a throttle (10) is arranged between the pressure reducing valve (5) and the pressure control valve (11).

6. Device according to one of the preceding claims, characterised in that, at one ring surface (28) of its control piston (27), the piston slide (22) of the clutch valve (13) is subjected against spring force to the action of the hydraulic fluid present at the actuating piston (23) of the clutch (30).

## Revendications

1. Dispositif d'actionnement électro-hydraulique d'un embrayage de blocage (30) d'un différentiel répartiteur (31) d'un véhicule automobile, comportant un piston d'actionnement (23) susceptible d'être sollicité par la pression d'un fluide à partir d'un conduit principal de commande (4) en fonction de la position d'une soupape de commande de pression (11) commandée électriquement, dans lequel la soupape de commande de pression (11) dérive du fluide sans pression vers le réservoir quand elle est actionnée et dans lequel le différentiel répartiteur (31) est placé à la suite d'une boîte de vitesses automatique (3), **caractérisé** en ce que le conduit principal de commande (4) est raccordé à un système hydraulique principal (2) d'une commande (3A) de la boîte de vitesses automatique, en ce qu'une pression réduite constante est obtenue dans un conduit de pilotage (7) à partir du système hydraulique principal (2) à travers un réducteur de pression (5), en ce que le conduit de pilotage (7), sur lequel est placée la soupape de commande de pression (11), agit à travers une chambre de pilotage (21) sur un piston de commande (26) d'un distributeur d'embrayage (13) qui est placé sur le conduit principal de commande (4) et dont le tiroir à pistons (22), chargé d'autre part par un ressort, alimente le piston d'actionnement (23) en fluide du conduit principal de commande (4) à travers des chambres annulaires commandées, quand la soupape de commande de pression (11) est ouverte, et en ce qu'un organe amortisseur, de préférence un amortisseur accumulateur à ressort (18, 19), est placé sur le conduit de pilotage (7) pour réduire les oscillations de la pression.

2. Dispositif selon la revendication 1, **caractérisé** en ce qu'un piston (19) de l'amortisseur accumulateur à ressort coopère avec une soupape de sécurité (6) qui est placée en amont du distributeur d'embrayage (13) sur le conduit principal de commande (4) et qui, lorsque la soupape de commande de pression (11) est ouverte, délivre du fluide du conduit principal de commande (4), à travers des chambres annulaires commandées, à un conduit de liaison (16) menant au distributeur d'embrayage (13) et en ce qu'un tiroir de commande (14) de la soupape de sécurité (6) est sollicité, sur une face frontale par la pression du conduit principal de commande (4) et sur la face frontale opposée par une force d'un ressort (18) qui est produite par le piston (19) de l'amortisseur.

3. Dispositif selon l'une des revendications précédentes **caractérisé** en ce que le piston (19) de l'amortisseur est mobile sous la pression du conduit de pilotage (7) jusqu'à une position de fin de course où il s'appuie contre un arrêt (20) ménagé sur un corps de la soupape de sécurité (6).

4. Dispositif selon l'une des revendications précédentes **caractérisé** en ce que, compte tenu de la différence de pression entre le conduit principal de commande (4) et le conduit de pilotage (7) quand la soupape de commande de pression (11) est fermée, les surfaces de la face frontale du tiroir de commande (14) et du piston (19) de l'amortisseur ont des dimensions différentes pour produire des forces axiales égales.

5. Dispositif selon l'une des revendications précédentes **caractérisé** en ce qu'un étranglement (10) est placé entre le réducteur de pression (5) et la soupape de commande de pression (11).

6. Dispositif selon l'une des revendications précédentes **caractérisé** en ce que le tiroir (22) du distributeur d' embrayage (13) est sollicité sur une surface annulaire (28) de son piston de commande (27), à l'encontre de la force d'un ressort, par le fluide se trouvant contre le piston d'actionnement (23) de l'embrayage (30).
